# FASCICULE DE BREVET EUROPEEN

(11) **EP 0 748 126 B1**
(45) Date de publication et mention de la délivrance du brevet: **24.10.2001**
(21) Numéro de dépôt: 96401190.2
(22) Date de dépôt: 04.06.1996
(51) Int. Cl.: H04N 7/62, H04N 7/52

(54) **Procédé et dispositif de synchronisation d'informations visuelles avec des informations audio**
Verfahren und Vorrichtung zur Synchronisierung von Video- und Audioinformationen
Method and apparatus for the synchronisation of video and audio information

(30) Priorité: 09.06.1995 FR 9506865
(43) Date de publication de la demande: 11.12.1996
(73) Titulaire: STMicroelectronics S.A., 94253 Gentilly Cédex (FR)
(72) Inventeur: Bramley, Richard, 38000 Grenoble (FR)
(74) Mandataire: Michelet, Alain

(56) Documents cités:
- EP-A- 0 577 329
- EP-A- 0 626 770
- EP-A- 0 668 700
- WO-A-91/11074
- FR-A- 2 648 972
- US-A- 3 971 888
- US-A- 4 660 079
- 1992 SID INTERNATIONAL SYMPOSIUM, 17 Mai 1992, BOSTON, MS, USA, pages 127-129, XP000479005 MACINNIS: "The MPEG System Specification: Multiplex, Coding, and Constraints"

## Description

L'invention concerne un procédé de synchronisation d'informations visuelles codées selon la norme MPEG1 ou 2 avec des informations audio, lors de leur décodage.

Lors de l'acquisition de données filmées, les informations représentant les images d'une part, et les sons d'autre part, sont naturellement synchronisées.

Les traitement successifs mis en oeuvre sur ces informations doivent maintenir cette synchronisation ou la reconstituer si elle est momentanément détruite.

Pour assurer cette synchronisation, les informations représentant les sons et les images comportent respectivement des repères temporels destinés à être mis en coïncidence ou au moins temporellement positionnés les uns par rapport aux autres, lors de la restitution ou de la reconstitution des films.

Les normes MPEG définissent des conditions de codage et de décodage d'images animées.

Les techniques de transmission et le stockage d'images numérisées permettent d'améliorer de manière significative la qualité des images finalement obtenues par rapport à la transmission analogique. Il est ainsi possible de multiplier également les applications de ces techniques.

Toutefois, la transmission directe et le stockage d'images numérisées animées nécessite un flux d'informations extrêmement élevé, ce qui rend nécessaire, en pratique, la compression et le codage de ces images.

Ainsi, les images numérisées sont codées avant transmission, de manière à diminuer la quantité d'informations les représentant, puis décodées après transmission.

Les techniques de codage et décodage sont bien entendu essentielles pour la qualité des images finalement obtenues et il est apparu nécessaire, pour assurer la compatibilité des différents matériels mettant en oeuvre ces techniques, d'en assurer une normalisation.

C'est ainsi qu'un groupe d'Experts (Moving Picture Expert Group - MPEG) a mis au point les normes ISO 11172 et ISO IEC 13818.

Ces normes, souvent désignées par les sigles MPEG1 et MPEG2, définissent des conditions de codage et de décodage d'images animées, éventuellement associées à un signal sonore, pouvant être utilisées aussi bien pour la mise en mémoire et la restitution d'images que pour leur transmission.

Ces normes MPEG peuvent donc être utilisées pour le stockage d'images sur des compact discs, compact discs interactifs, sur des bandes magnétiques, être utilisée pour la transmission d'images au travers de réseaux locaux, de lignes téléphoniques comme pour la transmission d'images télévision par voie hertzienne.

Les normes définissant de manière complète et détaillée l'ensemble de cette technique sont accessibles auprès des organismes de normalisation et il convient de s'y référer pour accéder à sa description détaillée.

Ainsi, lors du décodage du flux de données représentant les images animées codées selon les normes MPEG, la durée de transit des informations représentatives d'une image dans le décodeur est variable d'une image à l'autre.

De plus, il est classique dans les dispositifs de décodage de dissocier les informations systèmes qui portent des repères temporels, des informations images qui font l'objet du décodage.

Ainsi, lors de ces traitements, la synchronisation temporelle des images avec les informations sonores est perdue ou souffre pour le moins de certaines incertitudes par le fait du décodage.

Le but de l'invention est de proposer un procédé et un dispositif de synchronisation des informations visuelles avec les informations sonores ou audio correspondantes.

Le but de l'invention est atteint avec le procédé de synchronisation défini dans la revendication n°1 et le dispositif de synchronisation défini dans la revendication n°2.

A cet effet, l'invention concerne un procédé de synchronisation d'informations visuelles codées selon la norme MPEG avec des informations audio lors de leur décodage. Lesdites informations comportent des informations systèmes et des informations images regroupées en paquets, les informations systèmes incluent un repère temporel (PTS) pour chaque paquet d'image et les informations de chaque image commencent par un code de démarrage (PSC). Le décodage est piloté par un micro-contrôleur séparant les informations systèmes et les informations images et commandant un décodeur d'images.

Selon l'invention, un compteur de nombre de mots transmis, d'entrée du décodeur d'images, est lu lors de l'arrivée d'un repère temporel image (PTS) et sa valeur est mise en mémoire dans une pile du micro-contrôleur. Chaque code de démarrage commande, à sa sortie du décodeur d'images, un arrêt du micro-contrôleur et un compteur de nombre de mots transmis, de sortie du décodeur d'images, est simultanément lu et sa valeur comparée à celle de la pile. Lorsque sa valeur est supérieure à l'une des valeurs compteur de la pile, la valeur du repère temporel (PTS) correspondante lui est affectée et peu être utilisée pour la synchronisation avec le signal audio.

Selon un mode de réalisation particulier de l'invention, le micro-contrôleur est un micro-contrôleur externe par rapport au décodeur.

L'invention sera décrite ci-après plus en détail en référence aux Figures annexées :
- la Figure 1 est une représentation d'un flux de données images codées selon l'une des normes MPEG ;
- la Figure 2 est une représentation du flux de données images de la Figure 1 après séparation des données systèmes et des données de paquet d'images ;

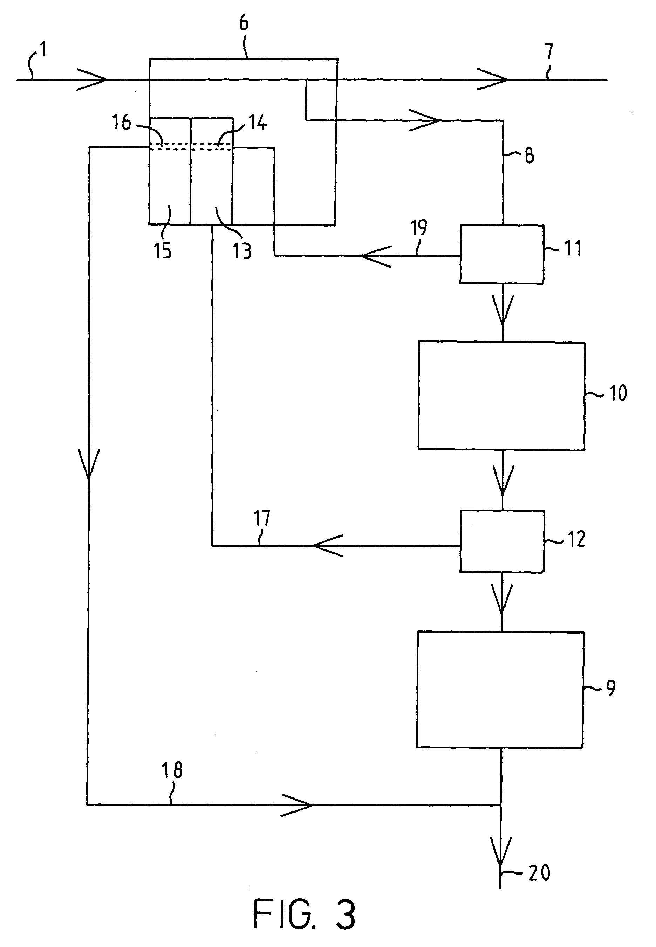

- la Figure 3 est une représentation schématique du dispositif de l'invention.

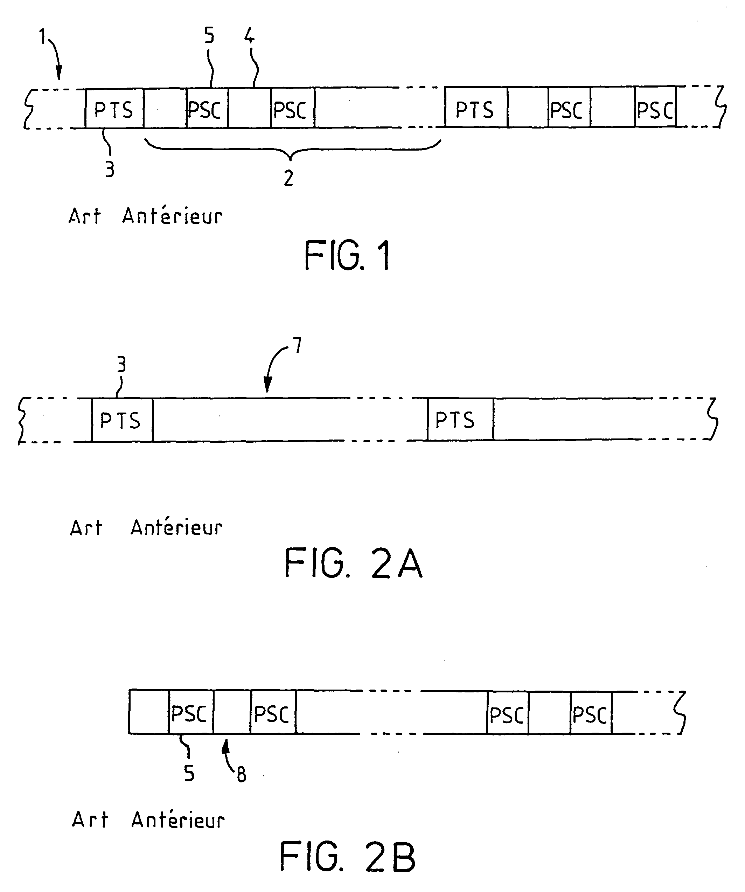

Sur la Figure 1, a été représenté le flux des informations 1 comprimées, tel qu'il résulte de la mise en oeuvre d'une norme MPEG. Les informations 2 représentant un paquet d'images sont précédées d'informations systèmes comportant un repère temporel (PTS) 3 et les informations représentatives de chaque image 4 sont précédées par un code de démarrage (PSC) 5.

Ces informations 1 sont séparées lors du décodage par un microprocesseur 6, le plus souvent externe, qui divise ces informations 1 en un ensemble d'informations 7 dites informations systèmes, comportant les repères temporels 3, et des informations images 8 comportant les codes de démarrage (PSC) 5.

Cette séparation est réalisée par le microprocesseur 6 pour fournir au décodeur 9, 10 les seules informations images 8.

Ces informations images 8, quelque fois appelées informations vidéo pure, ne comportent donc plus de repères temporels. Or, leur temps de transit dans le décodeur 9, 10 dépend de l'image concernée, et de sa position dans le paquet d'images.

Pour traduire ce phénomène, le décodeur réel est généralement symbolisé en deux éléments, le décodeur instantané 9 supposé avoir un comportement instantané et l'unité 10 de temporisation produisant une temporisation variable et souvent appelée "bit buffer".

Un premier compteur 11 placé à l'entrée du décodeur d'images, avant l'unité 10, compte les mots transmis dans les informations images 8 et adresse, par ligne 19, sa valeur 14 à une pile 13 dans le microprocesseur 6. De manière préférentielle, les informations images 8 sont transmises sous la forme de mots de seize bits et le compteur 11 est un compteur vingt-quatre bits qui fournit donc le nombre total de mots transmis au décodeur modulo deux à la puissance vingt-quatre. Par ailleurs, un paquet comprenant une référence temporelle étant introduit dans le microprocesseur 6, la valeur de sa référence temporelle 16 est mise en mémoire dans la pile 15, puis associée à la valeur 14 du compteur enregistrée dans la pile 13.

Un deuxième compteur présentant les mêmes caractéristiques que le compteur 11 est placé en sortie de l'unité 10 et constitue un compteur 12 de sortie de décodeur.

La valeur de ce compteur est comparée par la ligne 17 à la valeur du compteur d'entrée, le plus ancien, mis en mémoire dans la pile 13.

Lorsqu'au passage d'un code de démarrage (PSC), la valeur produite par le compteur 12 est supérieure à une valeur 14 du compteur 11 contenue dans la pile 13, la valeur de la référence temporelle 16 qui est associée, est affectée par la ligne 18 à l'image sortante du décodeur 9. On produit ainsi des informations 20 représentant les images décodées et des références temporelles.

Ainsi, bien qu'aucune information système n'ait transité par le décodeur 9, 10, le repère temporel qui était initialement affecté aux informations représentatives d'une image, avant leur décodage, se trouve également affecté aux informations représentant l'image après son décodage.

Le micro-contrôleur pilotant le décodage est avantageusement externe, c'est-à-dire distinct du décodeur 9, 10 lui-même. Toutefois, ces différents éléments peuvent être réalisés également dans un.seul ensemble.

La pile du micro-contrôleur contenant les valeurs fournies par le compteur de nombre de mots transmis d'entrée du décodeur est avantageusement un compteur de type premier entré-premier sorti (FIFO).

Chaque code de démarrage (PSC) associé à une image commande, à sa sortie du décodeur, un arrêt du micro-contrôleur 6 permettant la comparaison des codes d'entrée contenus dans la pile 13 avec le code de sortie fourni par le compteur de sortie 12 et l'extraction de la référence temporelle 16 dans les conditions indiquées plus haut.

L'association des références temporelles aux images sortant du décodeur permet toutes les utilisations souhaitées, leur positionnement par rapport aux flux de données des informations sonores qui comportent elles-mêmes des références temporelles.

## Revendications

1. Procédé de synchronisation d'informations visuelles codées selon la norme MPEG avec des informations audio lors de leur décodage,
lesdites informations comportant des informations systèmes et des informations images regroupées en paquets, les informations systèmes incluant un repère temporel (PTS) pour chaque paquet d'image, les informations de chaque image commençant par un code de démarrage (PSC),
le décodage étant piloté par un micro-contrôleur séparant les informations systèmes et les informations images et commandant un décodeur d'images,
**caractérisé en ce que** :
un compteur de nombre de mots transmis, d'entrée du décodeur d'images, est lu lors de l'arrivée d'un repère temporel image (PTS) et la valeur comptée est mise en mémoire dans une première pile du micro-contrôleur,
la valeur du repère temporel est mise en mémoire dans une deuxième pile et associée à la valeur enregistrée dans la première pile,
chaque code de démarrage commandant, à sa sortie du décodeur d'images, un arrêt du micro-contrôleur,
un compteur de nombre de mots transmis, de sortie du décodeur d'images, étant simultanément lu et sa valeur comparée à celle de la première pile,
lorsque sa valeur est supérieure à l'une des valeurs compteur de la pile, la valeur du repère temporel (PTS) correspondante lui est associée et affectée à l'image sortante, et utilisée pour la synchronisation avec le signal audio.

2. Dispositif de synchronisation d'informations visuelles codées selon la norme MPEG avec des informations audio, lors de leur décodage,
lesdites informations comportant des informations systèmes et des informations images regroupées en paquets, les informations systèmes incluant un repère temporel (PTS) pour chaque paquet d'image, les informations de chaque image commençant par un code de démarrage (PSC),
comprenant un micro-contrôleur externe pilotant le décodage et séparant les informations systèmes et les informations images et commandant un décodeur d'images,
**caractérisé en ce que** :
il comporte un compteur de nombre de mots transmis, d'entrée du décodeur d'images, lu lors de l'arrivée d'un repère temporel image (PTS) et la valeur comptée est mise en mémoire dans une première pile du micro-contrôleur externe,
la valeur du repère temporel est mise en mémoire dans une deuxième pile et associée à la valeur enregistrée dans la première pile,
chaque code de démarrage commandant, à sa sortie du décodeur d'images, un arrêt du micro-contrôleur externe,
un compteur de nombre de mots transmis, de sortie du décodeur d'images étant simultanément lu et sa valeur comparée à celle de la première pile,
lorsque sa valeur est supérieure à l'une des valeurs compteur de la pile, la valeur du repère temporel (PTS) correspondante lui est associée et affectée à l'image sortante et utilisée pour la synchronisation avec le signal audio.

3. Dispositif de synchronisation selon la revendication 2, **caractérisé en ce que** le micro-contrôleur est externe.

4. Dispositif de synchronisation selon l'une quelconque des revendications 2 et 3, **caractérisé en ce que** les informations images (8) sont transmises sous la forme de mots de 16 bits.

5. Dispositif de synchronisation selon la revendication 4, **caractérisé en ce que** les compteurs (11, 12) sont des compteurs 24 bits.

## Patentansprüche

1. Verfahren zur Synchronisation von codierten visuellen Informationen gemäß dem MPEG-Standard mit Audioinformationen zum Zeitpunkt ihrer Decodierung,
wobei die Informationen in Pakete zusammengefaßte Systeminformationen und Bildinformationen umfassen, wobei die Systeminformationen für jedes Bildpaket eine Zeitmarke (PTS) einschließen und die Informationen jedes Bildes mit einem Startcode (PSC) beginnen,
wobei die Decodierung durch eine Mikrosteuereinheit gelenkt wird, welche die Systeminformationen und die Bildinformationen trennt und einen Bilddecodierer steuert,
**dadurch gekennzeichnet,**
**dass** Zähler für die Anzahl an übertragenen Wörtern am Eingang des Bilddecodierers beim Empfang einer Bildzeitmarke (PTS) gelesen und der gelesene Wert in einem ersten Stapel der Mikrosteuereinheit gespeichert wird, wobei der Wert der Zeitmarke in einem zweiten Stapel gespeichert und mit dem Wert in Verbindung gesetzt wird, der im ersten Stapel registriert ist,
wobei jeder Startcode am Ausgang seines Bilddecodierers einen Stop der Mikrosteuereinheit steuert,
**dass** ein Zähler für die Anzahl an übertragenen Wörtern am Ausgang des Bilddecodierers gleichzeitig gelesen und sein Wert mit jenem des ersten Stapels verglichen wird,
**dass**, wenn sein Wert größer als einer der Zählwerte des Stapels ist, ihm die entsprechende Zeitmarke (PTS) zugeordnet und dem ausgehenden Bild zugerechnet und für die Synchronisation mit dem Audiosignal verwendet wird.

2. Vorrichtung zur Synchronisation von codierten visuellen Informationen gemäß dem MPEG-Standard mit Audioinformationen zum Zeitpunkt ihrer Decodierung,
wobei die Informationen in Pakete zusammengefaßte Systeminformationen und Bildinformationen umfassen und die Systeminformationen für jedes Bildpaket eine Zeitmarke (PTS) einschließen, wobei die Informationen jedes Bildes mit einem Startcode (PSC) beginnen,
umfassend eine externe Mikrosteuereinheit, welche die Decodierung lenkt und die Systeminformationen und die Bildinformationen trennt und einen Bilddecodierer steuert,
**dadurch gekennzeichnet,**
**dass** sie einen Zähler für die Anzahl an übertragenen Wörtern am Eingang des Bilddecodierers umfaßt, der beim Empfang einer Bildzeitmarke (PTS) gelesen wird und der gelesene Wert in einem ersten Stapel der externen Mikrosteuereinheit gespeichert wird, wobei der Wert der Zeitmarke in einem zweiten Stapel gespeichert und mit dem Wert in Verbindung gesetzt wird, der im ersten Stapel registriert ist,
**dass** jeder Startcode am Ausgang seines Bilddecodierers einen Stop der externen Mikrosteuereinheit steuert,
wobei ein Zähler für die Anzahl der übertragenen Wörter am Ausgang des Bilddecodierers gleichzeitig gelesen und sein Wert mit jenem des ersten Stapels verglichen wird,
**dass**, wenn sein Wert größer als ein Zählwert des Stapels ist, der Wert der entsprechenden Zeitmarke (PTS) ihm zugeordnet und dem ausgehenden Bild zugerechnet und für die Synchronisation mit dem Audiosignal verwendet wird.

3. Vorrichtung zur Synchronisation nach Anspruch 2, **dadurch gekennzeichnet, daß** die Mikrosteuereinheit extern ist.

4. Vorrichtung zur Synchronisation nach einem der Ansprüche 2 und 3, **dadurch gekennzeichnet, daß** die Bildinformationen (8) in Form von 16-Bit-Wörtern übertragen werden.

5. Vorrichtung zur Synchronisation nach Anspruch 4, **dadurch gekennzeichnet, daß** die Zähler (11, 12) 24-Bit-Zähler sind.

## Claims

1. A method of synchronising encoded visual information according to the MPEG standard with audio information during decoding thereof,
whereas the said information comprises system information and picture information grouped in packages, the system information including a time marker (PTS) for each picture package, whereby the information of each picture begins with a starting code (PSC),
decoding being driven by a micro-controller separating the system information from the picture information and operating a picture decoder,
**characterised in that**:
a counter for the number of words transmitted, for the input of the picture decoder, is read at the arrival of an image time marker (PTS) and the value counted is stored in a first stack of the micro-controller, the value of the time marker is stored in a second stack and associated with the value recorded in the first stack,
each starting code operating, at its output of the image decoder, a stoppage of the micro-controller,
a counter for the number of words transmitted, for the output of the picture decoder, being read simultaneously and its value compared with that of the first stack,
when its value is greater than one of the counter values of the stack, the value of the corresponding time marker (PTS) is associated to the latter, and is ascribed to the outgoing picture, and used for synchronisation with the audio signal.

2. A device for synchronisation of visual encoded information according to the MPEG standard with audio information, during decoding thereof,
whereas the said information comprises system information and picture information grouped in packages, the system information including a time marker (PTS) for each picture package, whereby the information of each picture begins with a starting code (PSC),
comprising an external micro-controller driving the decoding process and separating the system information from the picture information and operating a picture decoder,
**characterised in that**:
it comprises a counter for the number of words transmitted, for the input of the picture decoder, read at the arrival of an image time marker (PTS) and the value counted stored in a first stack of the external micro-controller, the value of the time marker is stored in a second stack and associated with the value recorded in the first stack,
each starting code operating, at its output of the image decoder, a stoppage of the external micro-controller,
a counter for the number of words transmitted, for the output of the picture decoder, being read simultaneously and its value compared with that of the second stack,
when its value is greater than one of the counter values of the stack, the value of the corresponding time marker (PTS) is associated to the latter, and is ascribed to the outgoing picture and used for synchronisation with the audio signal.

3. A synchronisation device according to claim 2, **characterised in that** the micro-controller is external.

4. A synchronisation device according to any of claims 2 and 3, **characterised in that** the image information (8) is transmitted in the form of 16-bit words.

5. A synchronisation device according to claim 4, **characterised in that** the counters (11, 12) are 24-bit counters.
